# EUROPEAN PATENT APPLICATION

(11) **EP 1 701 339 A2**
(43) Date of publication of application: **13.09.2006**
(21) Application number: 06004952.5
(22) Date of filing: 10.03.2006
(51) Int. Cl.: G10L 17/00

(54) **Method for controlling emotion information in wireless terminal**

(30) Priority: 11.03.2005 KR 2005020627
(71) Applicant: Samsung Electronics Co., Ltd., Suwon-si, Gyeonggi-Do (KR)
(72) Inventor: Kim, Bo-Yeon, Yeongtong-gu Suwon-si Gyeonggi-do (KR)
(74) Representative: Lang, Johannes

(57) **Abstract**

A method for controlling emotion information in a wireless terminal is provided. The method includes determining a degree of harmonization of emotion between a user of the wireless terminal and a communication partner in a communication mode, when the degree of harmonization is greater than a predetermined reference value, reporting that the degree of harmonization between the user and the communication partner is high, and when the degree of harmonization is smaller than the predetermined reference value, reporting that the degree of harmonization between the user and the communication partner is low.

## Description

### BACKGROUND OF THE INVENTION

### Field of the Invention:

The present invention relates to a method for controlling emotion information in a wireless terminal. More particularly, the present invention relates to a method for determining the emotive state of a communication partner, thereby obtaining effective results.

### Description of the Related Art:

With the development of communication technology, phone_communication, computer communication, and the like have become popular. In such a communication system, as voice or image communication becomes possible, more real-time and/or interactive communication is becoming possible.

However, a user using a wireless terminal capable of performing only regular voice communication must determine the current emotive state of the other party through only the voice of the other party. In order to solve this problem, a conventional method for analyzing voice data and reporting the emotive states of individuals has been proposed.

However, such a method can report emotive and stress states through simple analysis of voice data.

### SUMMARY OF THE INVENTION

Accordingly, the present invention has been made to solve the above-mentioned problems occurring in the prior art, and an object of the present invention is to provide a method for determining the emotive state of a communication partner, thereby obtaining effective results.

In accordance with one aspect of the present invention, a method for controlling emotion information in a wireless terminal is provided. The method comprises determining a degree of harmonization of emotion between a user of the wireless terminal and a communication partner in a communication mode, when the degree of harmonization is greater than a predetermined reference value, reporting that the degree of harmonization between the user and the communication partner is high, and when the degree of harmonization is smaller than the predetermined reference value, reporting that the degree of harmonization between the user and the communication partner is low.

In accordance with another aspect of the present invention, a method for controlling emotion information in a wireless terminal is provided. The method comprises analyzing voice data of a communication partner and extracting a degree of emotion of the communication partner in a communication mode, and storing the extracted degree of emotion so as to correspond to a number of the communication partner.

In accordance with a further aspect of the present invention, a method for controlling emotion information in a wireless terminal is provided. The method comprises, when a display of a degree of emotion for a corresponding number is selected, displaying the degree of emotion of the corresponding number on a date-by-date basis, and when a communication key is pressed, attempting a communication connection to the corresponding number.

In accordance with still another aspect of the present invention, a method for controlling emotion information in a wireless terminal is provided. The method comprises, when a communication connection to a corresponding number is attempted, displaying a degree of emotion of the corresponding number on a date-by-date basis, and when a communication connection is selected, attempting the communication connection to the corresponding number.

In accordance with yet another aspect of the present invention, a method for controlling emotion information in a wireless terminal is provided. The method comprises searching for each degree of emotion for numbers of a phone book in each predetermined period, when the degree of emotion is smaller than a predetermined reference value, reporting that a degree of user emotion of a corresponding number is low, and when the degree of user emotion of the corresponding number is low, switching into a predetermined mode and transmitting data to the corresponding number.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating the construction of a wireless terminal according to an exemplary embodiment of the present invention;
FIG. 2 is a flow diagram illustrating a method for displaying the degree of harmonization of emotion in a wireless terminal according to an exemplary embodiment of the present invention;
FIG. 3 is a flow diagram illustrating a process for storing the degree of emotion in a phone book in a wireless terminal according to an exemplary embodiment of the present invention;
FIG. 4 is a flow diagram illustrating a method for displaying the degree of emotion stored in a wireless terminal according to an exemplary embodiment of the present invention; and
FIG. 5 is a flow diagram illustrating a method for checking the degree of emotion in each predetermined period in a wireless terminal according to an exemplary embodiment of the present invention.

Throughout the drawings, like reference numerals will be understood to refer to like parts, components and structures.

### DETAILED DESCRIPTION OF EXEMPLARY EMBODIMENTS

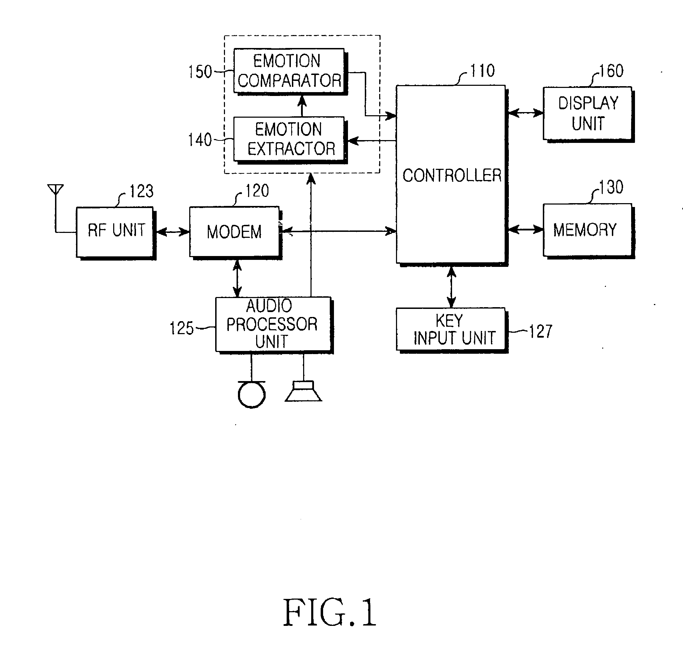

Exemplary embodiments of the present invention will be described in detail herein below with reference to the accompanying drawings. FIG. 1 is a block diagram illustrating the construction of a wireless terminal according to an exemplary embodiment of the present invention.

Referring to FIG. 1, a Radio Frequency (RF) unit 123 performs a wireless communication function of the wireless terminal. The RF unit 123 comprises an RF transmitter for up-converting and amplifying the frequency of transmitted signals, an RF receiver for low-noise amplifying received signals and down-converting the frequency of the received signals, etc.

A modem 120 comprises a transmitter for coding and modulating the transmitted signals, a receiver for demodulating and decoding the received signals, etc.

An audio processor unit 125 may comprise a codec. The codec comprises a data codec for processing packet data, etc., and an audio codec for processing audio signals such as voice. The audio processor unit 125 converts digital audio signals received through the modem 120 into analog signals through the audio codec for reproduction, or converts analog audio signals generated from a microphone into digital audio signals through the audio codec and transmits the digital audio signals to the modem 120. The codec may be separately provided or included in a controller 110.

An emotion extractor 140 analyzes voice data of a user and voice data of a communication partner, which are input through the audio processor unit 125, extracts the degrees of emotion of the user and the communication partner, respectively, and transmits the extracted degrees of emotion to an emotion comparator 150.

The emotion comparator 150 compares the degree of emotion of the user with the degree of emotion of the communication partner for analysis, determines the degree of harmonization, and transmits the degree of hannonization to the controller 110.

A memory 130 may comprise a program memory and a data memory. The program memory may store programs for controlling general operations of the wireless terminal, and programs for controlling the degree of emotion checked through the voice data to be reported or stored according to an exemplary embodiment of the present invention. The data memory temporarily stores data generated during the execution of the programs. Further, the memory 130 can store a program for performing conversation to various degrees of emotion based on the voice data, and a program for determining the degree of harmonization among the degrees of emotion according to an exemplary embodiment of the present invention.

The controller 110 performs a function of controlling the general operations of the wireless terminal, which may also comprise the modem 120 and the codec. According to an exemplary embodiment of the present invention, the controller 110 analyzes the voice data, checks the degree of emotion of the user and the degree of emotion of the communication partner, and determines and reports the degree of harmonization between the user and the communication partner. Further, the controller 110 causes the degree of emotion of the communication partner, which has been extracted by analyzing the voice data in a communication mode, to be stored in a phone book according to an exemplary embodiment of the present invention.

The controller 110 controls the degrees of emotion of corresponding numbers selected by the user in such a manner that they are displayed on a date-by-date basis according to an exemplary embodiment of the present invention. Further, the controller 110 controls the degrees of emotion stored in the corresponding numbers in such a manner that they are displayed on a date-by-date basis when a communication connection is attempted according to an exemplary embodiment of the present invention.

According to an exemplary embodiment of the present invention, the controller 110 checks each degree of emotion of numbers stored in the phone book in each predetermined period. As a result of the checking, if the checked degree of emotion is smaller than a predetermined reference value, the controller 110 controls the disclosed fact to be reported to the user.

The display unit 160 displays user data output from the controller 110. The display unit 160 may use a Liquid Crystal Display (LCD). In this case, the display unit 160 may comprise an LCD controller, a memory capable of storing image data, an LCD display device, etc. When the LCD has a touch screen function, the display unit 160 may also operate as an input unit.. The display unit 160 can display both the degree of harmonization of emotion between the user and the communication partner and the degree of emotion of the communication partner according to the embodiment of the present invention.

A keypad 127 comprises keys for inputting number and character information and function keys for setting various functions. Further, the keypad 127 comprises a function key for controlling emotion information according to an exemplary embodiment of the present invention.

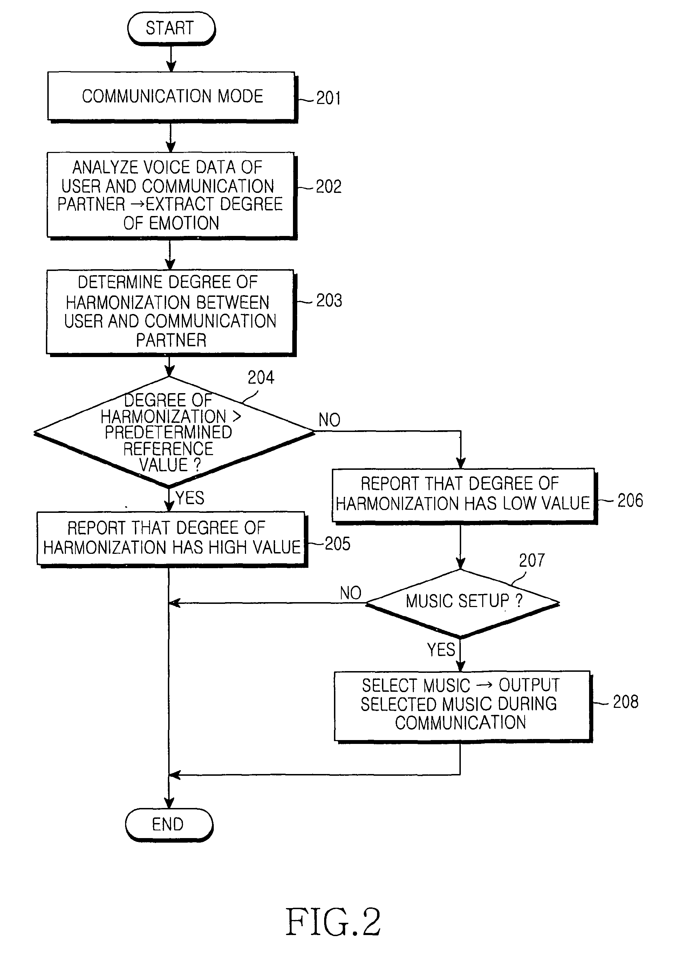

Hereinafter, an operation for analyzing voice data and controlling emotion information in the wireless terminal as described above will be described in detail with reference to FIGs. 2 through 5.

FIG. 2 is a flow diagram illustrating a method for determining and displaying the degree of harmonization of emotion between a user and a communication partner in the wireless terminal according to an exemplary embodiment of the present invention.

Referring to FIG. 2, if the user of the wireless terminal selects an emotion determination mode in a communication mode in step 201, the controller 110 detects the selection of the emotion determination mode, causes the emotion extractor 140 to analyze voice data of the user and the communication partner and to extract the degree of emotion of the user and the degree of emotion of the communication partner through the analyzed voice data, and transmits the extracted degrees of emotion to the emotion comparator 150 in step 202.

In step 203, the controller 110 causes the emotion comparator 150 to compare the degree of emotion of the user with the degree of emotion of the communication partner, which have been received from the emotion extractor 140, for analysis, thereby determining the degree of harmonization between the user and the communication partner.

If the degree of harmonization between the user and the communication partner is greater than a predetermined reference value in step 203, the controller 110 detects that the degree of harmonization is greater than the predetermined reference value in step 204, and reports that the current degree of harmonization between the user and the communication partner has a high value in step 205. Herein, the controller 110 can control the display unit 160 to display the degree of harmonization between the user and the communication partner or to report it through predetermined alarm sound.

The fact that the current degree of harmonization between the user and the communication partner has a high value is reported, so that the user can actively express matters which are difficult to talk about, business matters, love confession, and the like, to the communication partner.

If the degree of harmonization between the user and the communication partner is smaller than the predetermined reference value in step 203, the controller 110 detects that the degree of harmonization is smaller than the predetermined reference value in step 204, and reports that the current degree of harmonization between the user and the communication partner has a low value in step 206. Herein, the controller 110 can control the display unit 160 to display the degree of harmonization between the user and the communication partner or to report it through predetermined alarm sound.

After having recognized that the degree of harmonization between the user and the communication partner has a low value, the user may terminate communication after minimizing communication time with the communication partner, or select a music setup for elevating the degree of harmonization with the communication partner in order to talk about urgent or import matters.

If the user selects the music setup, the controller 110 detects the selection of the music setup in step 207 and displays the type of music which may be output during communication in step 208. If the user selects corresponding music while only the user listens music in step 208, the controller 110 detects the selection of the corresponding music, sets the selected music as background music during communication, and outputs the selected music.

As described above, an exemplary embodiment of the present invention can change the emotive state of the communication partner through the output of the background music during communication, thereby elevating the degree of harmonization between the user and the communication partner. Consequently, the user can smoothly talk about urgent or import matters.

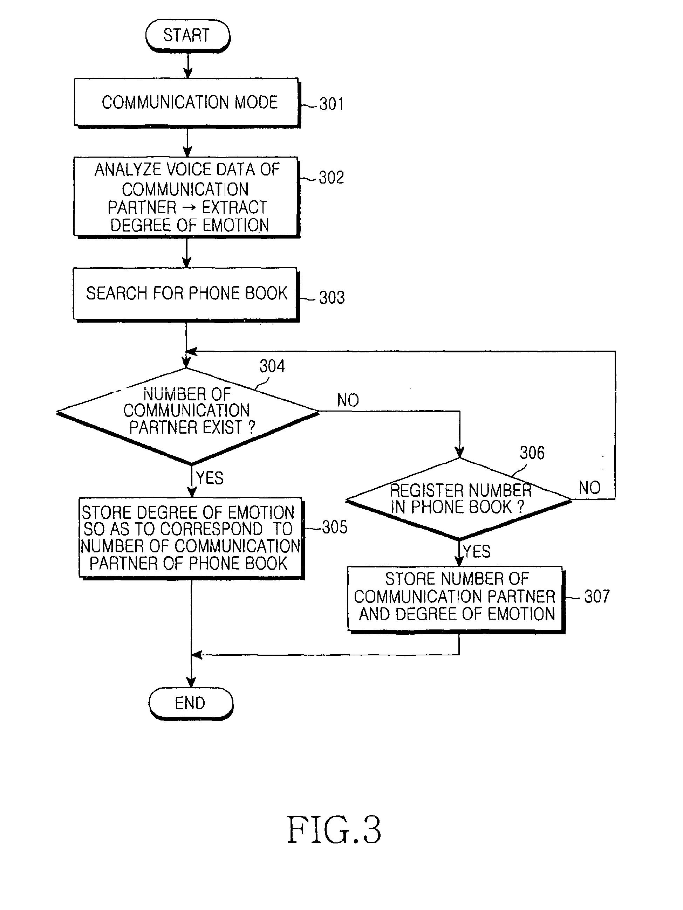

FIG. 3 is a flow diagram illustrating a process for storing the degree of emotion, which is extracted through the voice data of the communication partner, in the phone book of the wireless terminal according to an exemplary embodiment of the present invention.

Referring to FIG. 3, the controller 110 causes the emotion extractor 140 to analyze the voice data of the communication partner during communicating in a communication mode in step 301, and to extract the degree of emotion of the communication partner through the analyzed voice data in step 302.

In step 303, the controller 110 searches for the phone book in order to store the degree of emotion extracted in step 302 in the wireless terminal.

As a result of searching for the phone book, if the number of the communication partner exists in the phone book, the controller 110 detects the existence of the number of the communication partner in step 304, and stores the extracted degree of emotion on a date-by-date basis so as to correspond to the number of the communication partner stored in the phone book in step 305.

However, if the number of the communication partner does not exist in the phone book, the controller 110 detects the absence of the number of the communication partner, and informs the user that the number of the communication partner does not exist in the phone book in step 304. Herein, if the user selects a phone number registration, the controller 110 detects the selection of the phone number registration in step 306, and newly registers and stores both the number of the communication partner and the extracted degree of emotion in the phone book in step 307.

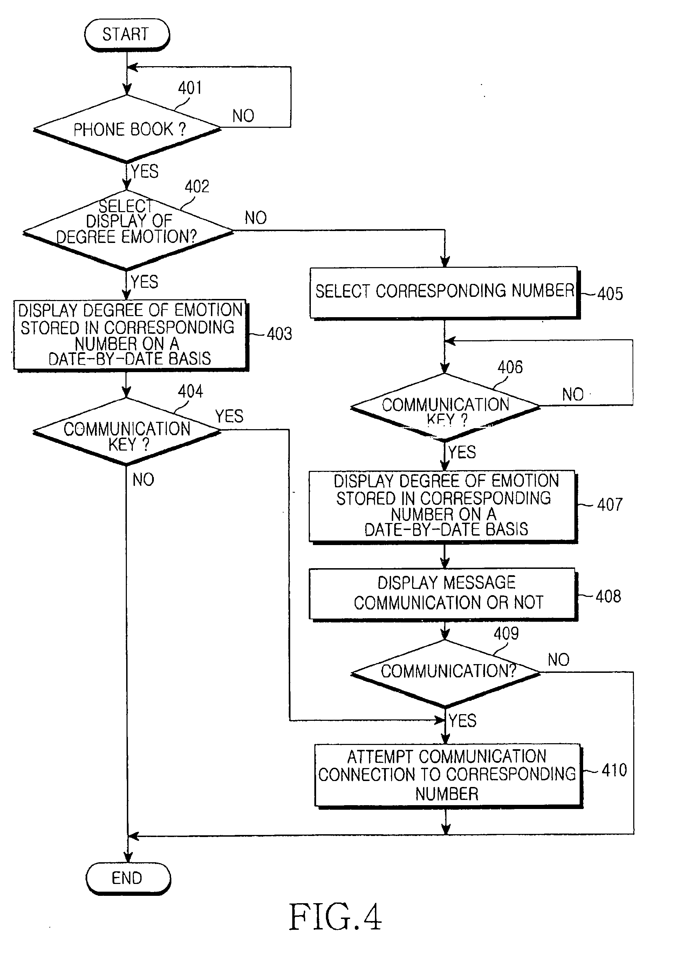

FIG. 4 is a flow diagram illustrating a method for displaying the degree of emotion stored in the phone book of the wireless terminal according to an exemplary embodiment of the present invention.

Referring to FIG. 4, if the user of the wireless terminal selects the phone book, the controller 110 detects the selection of the phone book and performs a switching to a phone book mode in step 401. If the user selects the display of the degree of emotion for the corresponding number selected by the user, the controller 110 detects the selection of the display in step 402, and displays the degree of emotion, which is stored in the corresponding number, on a date-by-date basis in step 403. It is possible to display the degree of emotion in step 403 by a graph, and to estimate the recent emotive state for a person of the corresponding number through the displayed emotion curve (biorhythm). Further, the controller 110 can estimate and display the degree of emotion of the next day for the person of the corresponding number. When the user performs communication with the person of the corresponding number after viewing the displayed degree of emotion, the controller 110 receives voice data of the person of the corresponding number and extracts the degree of emotion. Herein, when the extracted degree of emotion is different from the estimated degree of emotion, the controller 110 can detect the difference, replace the estimated degree of emotion with the extracted degree of emotion, and store the extracted degree of emotion so as to correspond to the corresponding number.

If the user presses a communication key after estimating the emotive state for the person of the corresponding number through the emotion curve (biorhythm), the controller 110 detects the press of the communication key in step 404 and attempts a communication connection to the corresponding number in step 410.

On the other hand,, if the user does not select the display of the degree of emotion in step 402, the controller 110 selects the corresponding umber in step 405. If the user presses the communication key after selecting the corresponding number, the controller 110 detects the press of the communication key in step 406, and displays the degree of emotion, which is stored in the corresponding number, on a date-by-date basis in step 407. It is possible to display the degree of emotion in step 407 by a graph, and possible to estimate the recent emotive state for a person, with whom the user desires to communicate, through the displayed emotion curve (biorhythm).

After displaying the degree of emotion stored in the corresponding number on a date-by-date basis, the controller 110 displays a message used for inquiring whether to perform a communication connection in step 408. If the user selects the communication connection, the controller 110 detects the selection of the communication connection in step 409 and attempts the communication connection to the corresponding number in step 410.

An implementation of the present invention involves a process in which the degree of emotion stored in the corresponding number is displayed on a date-by-date basis in step 407, and then the communication connection is performed through the message. However, if a predetermined time passes after the degree of emotion stored in the corresponding number is displayed on a date-by-date basis, it is also possible to attempt the communication connection to the corresponding number.

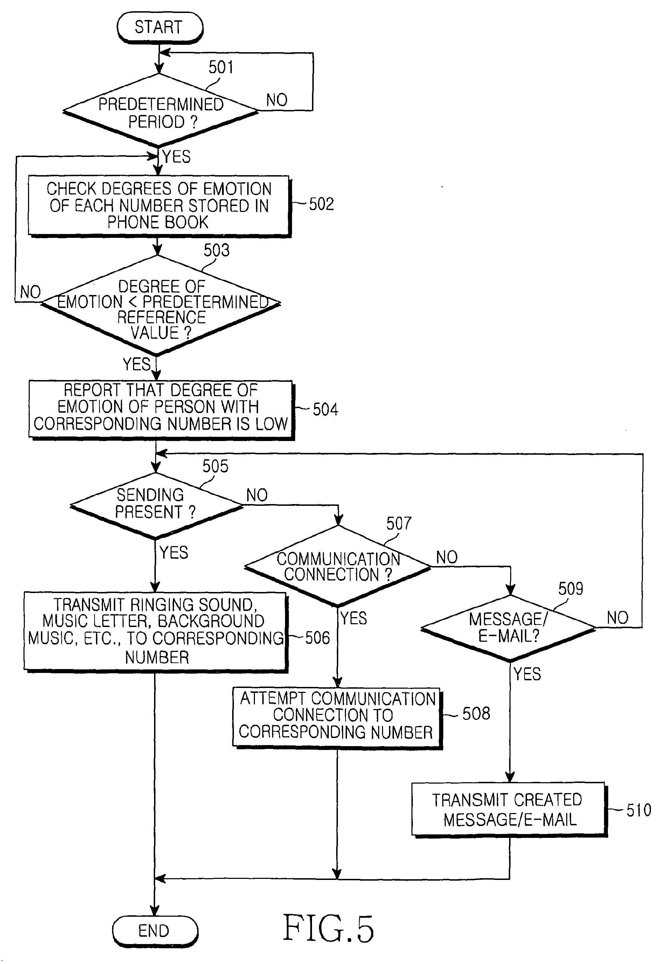

FIG. 5 is a flow diagram illustrating a method for checking the degree of emotion, which is stored in the phone book of the wireless terminal, in each predetermined period, and displaying the degree of emotion according to an exemplary embodiment of the present invention. An exemplary embodiment of the present invention describes an example for checking a person with a low degree of emotion and informing a user of the person. However, it is possible to inform a user of a person with a high degree of emotion, etc., according to a user setup.

Referring to FIG. 5, the controller 110 sets a predetermined period in order to search for the degree of emotion stored in the phone book, and checks the degree of emotion. If the predetermined period is reached, the controller 110 detects the arrival of the predetermined period in step 501, and checks the degrees of emotion of each number stored in the phone book in step 502.

As a result of checking in step 502, if a corresponding number, the degree of emotion of which is smaller than a predetermined reference value, is searched, the controller 110 detects the search result in step 503, and reports that the degree of emotion of a person with the corresponding number is low in step 504.

After recognizing that the degree of emotion of the person with the corresponding number is low, if the user selects a predetermined mode, e.g. a comfort mode, in order to transmit predetermined data to the person with the corresponding number, the controller 110 detects the selection of the comfort mode, and switches the mode of the wireless terminal into the comfort mode.

If the user selects "sending a present" in the comfort mode, the controller 110 detects the selection of the "sending a present" in step 505, and transmits ringing sound, a music letter, background music, and the like, which are selected by the user, to the corresponding number as a present in step 506. If the user selects "communication connection" in the comfort mode, the controller 110 detects the selection of the "communication connection" in step 507, and attempts the communication connection to the corresponding number in step 508. If the user selects "message/e-mail" in the comfort mode, the controller 110 detects the selection of the "message/e-mail" in step 509, and transmits message/e-mail to the corresponding number as a present in step 510.

Through the comfort mode, the user of the wireless terminal can make the person with the corresponding number feel that the user comforts or always cares for the person.

As described above, an exemplary embodiment of the present invention can detennine emotive states through voice data of a communication partner and reports the determined emotive states, thereby causing a conversation with the communication partner to be smoothly performed.

Further, an exemplary embodiment of the present invention can perform emotion management for an important person, thereby causing a user to always keep a good impression on the important person.

Although exemplary embodiments of the present invention have been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method for controlling emotion information in a wireless terminal, the method comprising:
determining a degree of harmonization of emotion between a user of the wireless terminal and a communication partner in a communication mode;
when the degree of harmonization is greater than a predetermined reference value, reporting that the degree of harmonization between the user and the communication partner is high; and
when the degree of harmonization is smaller than the predetermined reference value, reporting that the degree of harmonization between the user and the communication partner is low.

2. The method as claimed in claim 1, wherein the determining the degree of harmonization comprises:
analyzing voice data of the user and voice data of the communication partner;
extracting a degree of emotion of the user and a degree of emotion of the communication partner through the analyzed voice data; and
determining the degree of harmonization between the user and the communication partner through the extracted degrees of emotion.

3. The method as claimed in claim 1, further comprising, when the degree of harmonization is smaller than the predetermined reference value, selecting music and outputting the music as background music during communication.

4. A method for controlling emotion information in a wireless terminal, the method comprising:
analyzing voice data of a communication partner and extracting a degree of emotion of the communication partner in a communication mode; and
storing the extracted degree of emotion so as to correspond to a number of the communication partner.

5. The method as claimed in claim 4, wherein the storing comprises:
searching for the number of the communication partner in a phone book;
when the number of the communication partner exists in the phone book, storing the extracted degree of emotion in the phone book so as to correspond to the number of the communication partner; and
when the number of the communication partner does not exist in the phone book, newly registering both the extracted degree of emotion and the number of the communication partner in the phone book.

6. The method as claimed in claim 4, wherein the extracted degree of emotion comprises date information and is stored so as to correspond to the number of the communication partner.

7. A method for controlling emotion information in a wireless terminal, the method comprising:
when a display of a degree of emotion for a corresponding number is selected, displaying the degree of emotion of the corresponding number on a date-by-date basis; and
when a communication key is pressed, attempting a communication connection to the corresponding number.

8. The method as claimed in claim 7, wherein the selecting the display of the degree of emotion is performed in a phone book.

9. A method for controlling emotion information in a wireless terminal, the method comprises:
when a communication connection to a corresponding number is attempted, displaying a degree of emotion of the corresponding number on a date-by-date basis; and
when a communication connection is selected, attempting the communication connection to the corresponding number.

10. The method as claimed in claim 8, wherein the degree of emotion of the corresponding number comprises date information and is displayed by a graph.

11. The method as claimed in claim 9, wherein the degree of emotion of the corresponding number comprises date information and is displayed by a graph.

12. A method for controlling emotion information in a wireless terminal, the method comprises:
searching for each degree of emotion for numbers of a phone book in each predetermined period;
when the degree of emotion is smaller than a predetermined reference value, reporting that a degree of user emotion of a corresponding number is low; and
when the degree of user emotion of the corresponding number is low, switching into a predetermined mode and transmitting data to the corresponding number.

13. The method as claimed in claim 12, wherein the switching into the predetermined mode and transmitting the data to the corresponding number comprises:
when a communication connection is selected in the predetermined mode, performing a communication connection to the corresponding number;
when a message/e-mail is selected in the predetermined mode, transmitting a message/e-mail to the corresponding number; and
when "sending a present" is selected in the predetermined mode, selecting and transmitting a present, such as ringing sound, a music letter and background music, to the corresponding number.
